# EUROPÄISCHE PATENTSCHRIFT

(11) **EP 0 928 764 B1**
(45) Veröffentlichungstag und Bekanntmachung des Hinweises auf die Patenterteilung: **27.06.2001**
(21) Anmeldenummer: 98122909.9
(22) Anmeldetag: 02.12.1998
(51) Int. Cl.: B65H 15/00, B65G 47/248

(54) **Einrichtung zum Wenden von flachen Sendungen**
Device for turning flat mail objects
Dispositif pour tourner des objets postaux plats

(30) Priorität: 23.12.1997 DE 19757717
(43) Veröffentlichungstag der Anmeldung: 14.07.1999
(73) Patentinhaber: SIEMENS AKTIENGESELLSCHAFT, 80333 München (DE)
(72) Erfinder: Schererz, Holger, 15345 Rehfelde (DE)

(56) Entgegenhaltungen:
- US-A- 4 705 157
- US-A- 5 330 174

## Beschreibung

Die Erfindung betrifft eine Einrichtung zum Wenden von flachen Sendungen, die nacheinander auf ihrer Schmalseite stehend mit einem Transportsystem zugeführt werden, in eine liegende Position ohne Transportunterbrechung.

In Sortiermaschinen werden die Sendungen im Eingangsteil aus einem Stapel heraus vereinzelt. Damit die Masse des Stapels keinen Einfluß auf die Abzugsqualität hat, gelangt der Stapel auf ein horizontal ausgerichtetes Feederbett, wobei die Sendungen auf ihrer Schmalseite stehen. Die Sendungen werden dann in der stehenden Position abgezogen. Um die Sendungen anschließend mit geringem Maschinenplatzbedarf auf eine optimale Anzahl von Sortierfächern zu verteilen, ist es vorteilhaft, die Sendungen liegend abzustapeln. So ist es möglich, mehrere Fächer übereinander anzuordnen.

Daraus folgt, daß die Sendungen während ihres Laufes durch die Sortiermaschine von der auf der Schmalseite stehenden Position in eine liegende Position gebracht werden müssen. Diese Aufgabe wird in einer Einrichtung zum Wenden der Sendungen realisiert. Dabei erfolgt eine Drehung der Sendungen um ihre Längsachse um einen Betrag zwischen 90° und 70°, je nachdem, ob die Sendungen in ihrer liegenden Position horizontal oder geneigt orientiert sind.

Bekannt sind Lösungen, bei denen die Sendungen zwischen angetriebenen Riemen eingeklemmt durch die Sortiermaschine transportiert werden. Zum Wenden werden die Bänder entsprechend verdrillt. Bei Postkarten und Normalbriefen hat sich dieses Verfahren bewährt. Soll aber ein größeres Sendungsspektrum verarbeitet werden, von dünnen und leichten Postkarten bis zu schweren Großbriefen, so kann mit diesem Prinzip ein platzsparender und sicherer Betrieb nicht gewährleistet werden. Dies liegt daran, daß ein sicherer, schlupf freier Transport der schweren Sendungen durch die Riemenklemmung nicht sicher ist, und wenn der dicken Sendung eine dünne folgt, diese durch die noch auseinandergedrückten Riemen nicht gefaßt wird. Dieser Effekt wäre nur durch sehr große Abstände zwischen den Sendungen zu vermeiden.

Siehe beispielsweise die US 5 330 174 A, die dem Oberbegriff des Anspruchs 1 entspricht.

Eine Wendeeinrichtung mußte also sehr lang sein bei ungewöhnlich langen, die Performance der Maschine senkenden Sendungslücken. Eine Lösung zur Vermeidung bzw. Minderung dieser Nachteile wurde bekannt, bei welcher die verdrillten Riemen zusätzlich durch angefederte Rollen zusammengedrückt werden. Dies ist aufwendig und eine sichere Funktion ist nicht gewährleistet, da durch die Rollen der Riemenlauf beeinflußt wird und der Riemenlauf über eine Stellrolle ausgeregelt werden muß.

Der im Anspruch 1 angegebenen Erfindung liegt daher das Problem zugrunde, eine Einrichtung zum sicheren Wenden von Sendungen, die sowohl dünn und leicht als auch dick und schwer sein können, von einer auf der Schmalseite stehenden Position in eine liegende Position während des Transports mit mittlerer Geschwindigkeit durch Drehung um ihre Längsachse mit geringer Baulänge zu schaffen.

Durch das gezielte Kippen und Ausrichten der Sendungen bei minimalen Lückenverschiebungen wurde eine funktionssichere Einrichtung mit relativ kurzer Baulänge bei geringem Aufwand möglich.

In den weiteren abhängigen Ansprüchen sind vorteilhafte Ausführungen der Erfindung dargelegt. So wird in den Ansprüchen 2 und 3 angegeben, daß das beim Fallen der Sendungen entstehende Luftkissen vorteilhaft mittels genügend großem Spalt zwischen Transportband und Unterflurband und/oder Löcher im Transportband und/oder Unterflurband schnell abgebaut wird.

Gemäß Anspruch 4 ist es vorteilhaft, zur Verbesserung der Mitnahme in der Einrichtung auch in der Leiteinrichtung ein angetriebenes, endloses Band einzusetzen.

Sollen die Sendungen nach dem Wenden beschleunigt werden, so ist es gemäß Anspruch 5 vorteilhaft, das Transportband ebenfalls mit geringem Reibungskoeffizienten auszuführen, damit der Beschleunigungsvorgang nicht behindert wird, wenn Sendungsteile sich noch auf dem Transportband befinden.

Gemäß Anspruch 6 verläuft bei normalem Sendungsaufkommen das schräg nach außen stehende Seitenband vorteilhaft parallel zum Unterflurband. Bedarf es bei entsprechendem Sendungsaufkommen zusätzlicher Ausrichtmaßnahmen, so verläuft nach Anspruch 7 das Seitenband in einem spitzen Winkel zum Unterflurband.

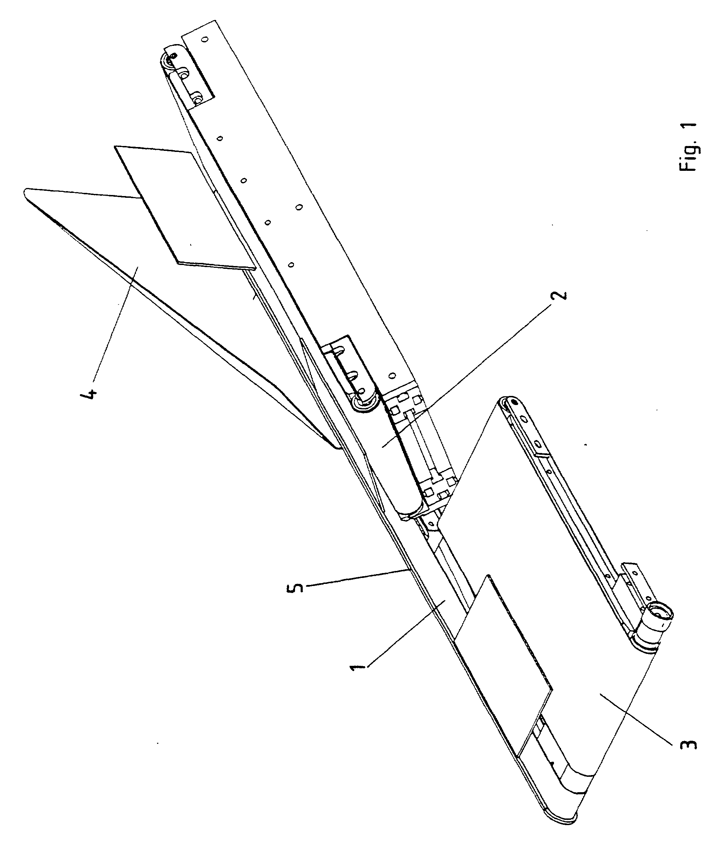

Anschließend wird die Erfindung in einem Ausführungsbeispiel anhand der Zeichnung näher erläutert. Dabei zeigt
- FIG 1: eine perspektivische Darstellung der erfindungsgemäßen Einrichtung

Die Wendeeinrichtung enthält ein durchgehendes Unterflurband 1, ein um ca. 40-45° schräg nach außen angestelltes Seitenband 2, ein in Transportrichtung nach dem Seitenband angeordnetes und am Ausgang parallel zum Unterflurband 1 verlaufendes Transportband 3 sowie eine zum Kippen der Sendung notwendige Leiteinrichtung 4.

Die Sendung wird am Einlauf vom Transportsystem übernommen und kann, in dieser Lage, weil sie nicht mehr seitlich gestützt wird, entweder nach rechts oder links umkippen. In der oben geschilderten Maschine kommen die Sendungen, bedingt durch ein vorgeschaltetes Modul, in einer 8°-Schräglage an. (Dies ist aber nicht unbedingt notwendig.) Sie befinden sich daher vornehmlich in der Vorzugsrichtung zum Wenden. Sendungen, die sich nicht von allein in diese Vorzugsrichtung begeben, werden durch die Leiteinrichtung 4 in diese Lage gebracht. Die Leiteinrichtung 4 kann ein Leitblech mit geringem Reibungskoeffizienten (passiv) sein, das die Sendung während des Transportes abdrängt und in die Vorzugsrichtung kippt. Bei Anordnungen, in denen erhöhter Wert auf Schlupffreiheit gelegt wird, kann die Leiteinrichtung auch als Band ausgeführt sein (aktiv).

Die Sendung kippt also seitlich auf das Seitenband 2, verlagert also seine Auflagepunkte vom Unterflurband 1 auf das Seitenband 2. Da sowohl das Seitenband 2 also auch das Unterflurband 1 einen relativ geringen Reibungskoeffizienten hat, wird die Sendung bis zu der seitlich auf dem Unterflurband 1 aufgebrachten Erhöhung 5 abrutschen (Ausrichteffekt).

Mindestens die zur Lauffläche des Unterflurbandes 1 annähernd senkrechte Begrenzung der Erhöhung weist gegenüber dem Unterflurband 1 und Seitenband 2 einen höheren Reibungskoeffizienten auf und ist im weiteren Verlauf der Wendung hauptverantwortlich für eine gute Mitnahme der Sendungen. Nachdem die Sendung das Seitenband 2 passiert hat, klappt sie bedingt durch ihr Eigengewicht die restlichen 40 ... 45° bis auf das horizontale Transportband 3. Damit wird gewährleistet, daß die Sendung trotz des sich kurzzeitig aufbauenden Luftpolsters über dem Transportband 3 nicht über das Luftpolster abgleitet bzw. abrutscht, sondern an der Begrenzung der Erhöhung 5 anliegt.

Zum Abbau des Luftpolsters ist zwischen parallel zueinander verlaufendem Unterflur- und Transportband 1, 3 ein Spalt zum schnelleren Abbau des Luftpolsters vorhanden. Ebenso möglich ist eine Perforierung (Lochung) des Transportbandes 3 und/oder des Unterflurbandes 1. Diese Maßnahmen realisieren bei niederen bis mittleren Transportgeschwindigkeiten bis ca. 1m/s eine kostengünstige, sichere Wendung der Sendung bei geringem Platzbedarf, hinreichend kleiner Lückenverschiebung und guter Ausrichtqualität.

Das Transportband 3 weist ebenfalls einen geringen Reibungskoeffizienten auf, da anschließend die Sendungen beschleunigt werden und der Beschleunigungsvorgang nicht behindert werden soll, wenn noch Teile der Sendungen sich auf dem Transportband 3 befinden. Die beschriebene Einrichtung ist für eine mittlere Geschwindigkeit bis zu ca. 1,5 m/s einsetzbar.

## Patentansprüche

1. Einrichtung zum Wenden von flachen Sendungen, die nacheinander auf ihrer Schmalseite stehend mit einem Transportsystem zugeführt werden, in eine liegende Position, gekennzeichnet durch
- ein angetriebenes Unterflurband (1) mit geringem Reibungskoeffizienten, das an einem seitlichen Rand eine Erhöhung (5) mit einer zur Lauffläche des Unterflurbandes annähernd senkrechten, einen gegenüber dem Unterflurband höheren Reibungskoeffizienten aufweisenden Begrenzung,
- ein seitlich am Unterflurband (1) an der Seite ohne Erhöhung schräg nach außen stehendes Seitenband (2) mit geringem Reibungskoeffizienten, das mit der gleichen Geschwindigkeit wie das Unterflurband (1) angetrieben wird,
- eine seitlich am Unterflurband (1) an der Seite der Erhöhung (5) gegenüber dem schräg stehenden Seitenband (2) angeordnete Leiteinrichtung (4), die die Sendungen auf das schräg stehende Seitenband (2) kippt und die auf die Sendungen höchstens geringe, zu den Mitnahmekräften entgegengerichtete Kräfte ausübt,
- und ein dem schräg stehenden Seitenband (2) in Transportrichtung folgendes, neben dem Unterflurband (1) angeordnetes Transportband (3), dessen Lauffläche mit der Lauffläche des Unterflurbandes (1) eine Ebene bildet, wobei das Unterflurband (1) und das Transportband (3) so angeordnet und/oder ausgebildet sind, daß das sich beim Fallen der Sendungen bildende Luftpolster schnell abgebaut wird.

2. Einrichtung nach Anspruch 1, dadurch gekennzeichnet, daß sich zwischen dem Transportband (3) und dem Unterflurband (1) ein Spalt befindet, der so breit ist, daß das beim Fallen der Sendungen entstehende Luftpolster schnell abgebaut wird.

3. Einrichtung nach Anspruch 1, dadurch gekennzeichnet, daß sich im Transportband (3) und/oder Unterflurband (1) zum schnellen Abbau des beim Fallen der Sendungen entstehenden Luftpolsters Löcher befinden.

4. Einrichtung nach Anspruch 1, dadurch gekennzeichnet, daß die Leiteinrichtung (4) als entsprechend angeordnetes und geformtes, mit gleicher Geschwindigkeit wie das Unterflurband (1) angetriebenes endloses Band ausgeführt ist.

5. Einrichtung nach Anspruch 1, dadurch gekennzeichnet, daß das Transportband (3) ebenfalls einen geringen Reibungskoeffizienten besitzt.

6. Einrichtung nach Anspruch 1, dadurch gekennzeichnet, daß das schräg nach außen stehende Seitenband (2) parallel zum Unterflurband (1) verläuft.

7. Einrichtung nach Anspruch 1, dadurch gekennzeichnet, daß das schräg nach außen stehende Seitenband (2) in einem spitzen Winkel zum Unterflurband (1) verläuft.

## Claims

1. Device for turning flat items of mail, which are supplied one after another, standing on their narrow side, by a transport system, into a lying position, characterized by
- a driven underfloor belt (1) with a low coefficient of friction which, at one lateral edge, has an elevation (5) with a boundary which is approximately perpendicular to the running surface of the underfloor belt and has a coefficient of friction higher than that of the underfloor belt,
- a side belt (2) which stands obliquely outwards at the side of the underfloor belt (1) on the side without an elevation, has a low coefficient of friction and is driven at the same speed as the underfloor belt (1),
- a guide device (4) which is arranged at the side of the underfloor belt (1), on the side of the elevation (5), opposite the oblique side belt (2), the guide device tilting the items of mail onto the oblique side belt (2) and exerting on the items of mail forces which are at most low and directed counter to the driving forces,
- and a transport belt (3) which follows the oblique side belt (2) in the transport direction, is arranged beside the underfloor belt (1) and whose running surface forms a plane with the running surface of the underfloor belt (1), the underfloor belt (1) and the transport belt (3) being arranged and/or designed in such a way that the air cushion which forms as the items of mail fall is dissipated rapidly.

2. Device according to Claim 1, characterized in that between the transport belt (3) and the underfloor belt (1) there is a gap which is sufficiently wide that the air cushion which arises as the items of mail fall is dissipated rapidly.

3. Device according to Claim 1, characterized in that in the transport belt (3) and/or underfloor belt (1) there are holes for the rapid dissipation of the air cushion that arises as the items of mail fall.

4. Device according to Claim 1, characterized in that the guide device (4) is implemented as an appropriately arranged and shaped endless belt which is driven at the same speed as the underfloor belt (1).

5. Device according to Claim 1, characterized in that the transport belt (3) likewise has a low coefficient of friction.

6. Device according to Claim 1, characterized in that the side belt (2) standing obliquely outwards runs parallel to the underfloor belt (1).

7. Device according to Claim 1, characterized in that the side belt (2) standing obliquely outwards runs at an acute angle to the underfloor belt (1).

## Revendications

1. Dispositif pour tourner à une position couchée des envois postaux plats qui sont envoyés l'un après l'autre de chant sur leur petit côté par un système de transport, caractérisé par
- une bande (1) inférieure entraînée, à petit coefficient de friction, qui comporte sur un bord latéral une surélévation (5) ayant une délimitation à peu près perpendiculaire à la surface de passage de la bande inférieure et ayant un coefficient de friction supérieur à celui de la bande inférieure,
- une bande (2) latérale en biais vers l'extérieur latéralement sur la bande (1) inférieure, qui a un petit coefficient de friction et qui est entraînée à la même vitesse que la bande (1) inférieure,
- un dispositif (4) de guidage, qui est monté latéralement sur la bande (1) inférieure, du côté de la surélévation (5) faisant face à la bande (2) latérale en biais, qui bascule les envois postaux sur la bande (2) latérale en biais et qui exerce sur les envois postaux des forces au plus petites, en sens inverse des forces d'entraînement,
- et une bande (3) de transport, qui suit la bande (2) latérale en biais dans la direction de transport, qui est montée à côté de la bande (1) inférieure et dont la surface de passage forme un plan avec la surface de passage de la bande (1) inférieure, la bande (1) inférieure et la bande (3) de transport étant montées et/ou réalisées de telle manière qu'un coussin d'air se formant lors de la chute des envois postaux est rapidement supprimé.

2. Dispositif suivant la revendication 1, caractérisé en ce qu'il se trouve entre la bande (3) de transport et la bande (1) inférieure une fente qui est d'une largeur telle que le coussin d'air se formant lors de la chute des envois postaux est rapidement supprimé.

3. Dispositif suivant la revendication 1, caractérisé en ce qu'il se trouve dans la bande (3) de transport et/ou dans la bande (1) inférieure des trous pour supprimer rapidement le coussin d'air qui se forme lors de la chute des envois postaux.

4. Dispositif suivant la revendication 1, caractérisé en ce que le dispositif (10) de guidage est réalisé en bande sans fin montée et conformée en conséquence, entraînée à la même vitesse que la bande (1) inférieure.

5. Dispositif suivant la revendication 1, caractérisé en ce que la bande (3) de transport a également un petit coefficient de friction.

6. Dispositif suivant la revendication 1, caractérisé en ce que la bande (2) latérale en biais vers l'extérieur s'étend parallèlement à la bande (1) inférieure.

7. Dispositif suivant la revendication 1, caractérisé en ce que la bande (2) latérale en biais vers l'extérieur s'étend en faisant un angle aigu avec la bande (1) inférieure.
